# EUROPEAN PATENT SPECIFICATION

(11) **EP 1 799 144 B1**
(45) Date of publication and mention of the grant of the patent: **09.01.2008**
(21) Application number: 05794562.8
(22) Date of filing: 21.09.2005
(51) Int. Cl.: A61D 11/00, A01J 7/04

(54) **APPLICATOR AND METHOD FOR TREATING THE TEATS OF MILKING ANIMALS**
APPLIKATOR UND VERFAHREN ZUR BEHANDLUNG DER ZITZEN VON MELKTIEREN
APPLICATEUR ET METHODE POUR TRAITER LES TRAYONS D'ANIMAUX A TRAIRE

(30) Priority: 23.09.2004 IT CR20040017
(43) Date of publication of application: 27.06.2007
(73) Proprietor: Lucchini, Emilio, 26048 Sospiro (IT); Farina, Felice, 26048 Sospiro (IT)
(72) Inventor: GENNARI, Francesco, I-26043 Persico Dosimo (IT); FARINA, Felice, I-26048 Sospiro (IT)
(74) Representative: Biazzi, Riccardo
(86) International application number: PCT/IT2005/000541
(87) International publication number: WO 2006/033131

(56) References cited:
- EP-A- 1 224 858
- US-A1- 2003 070 621

## Description

The present invention according to claim 1, respectively claim 9, relates to an applicator, respectively a method, for cleaning or disinfecting the teats of milking animals, especially cows. An applicator according to the preamble of claim 1 is already known from US-A-2003/0070621.

The great importance of cleaning and/or disinfecting the teats of milking animals, prior to and/or after milking, is known, in order to guarantee the hygiene of the milk and to prevent infections. The term "detergent product" is used herein to refer to a pre-milking detergent product, or to an after-milking disinfectant.

According to known technique (EP-A-1224858) manual applicators are used, comprising a container for a liquid detergent and a generally frustoconical cup adapted to receive the teat of the animal. The applicator can be connected to a source of compressed air, and is provided with a manual shut-off valve, typically operated by a gun-trigger. A small tube connected to the air valve is provided inside the container, said tube ending in a foaming riddled plate.

When the air valve is opened, the container is pressurized and the liquid detergent rise into the cup; the compressed air, flowing through the foaming riddled plate, forms a certain quantity of foam inside the liquid.

It is known that a foam is more effective than a liquid, because of a longer contact with the teat; to this purpose, detergents with specific foaming agents are used.

A disadvantage of these applicators is the interruption of work that is required to refill the container. Moreover, the container full of liquid makes the applicator quite heavy and uncomfortable to handle.

Another disadvantage is that the applicator does not provide a perfectly homogeneous foam, nor it allows to adjust the density of the foam, which is a key parameter for the effectiveness of the treatment. A very liquid foam, in fact, flows too rapidly from the teat; on the other hand, a very dense foam cannot penetrates through the creases of the animal's skin and is more difficult to remove.

When the detergent is obtained by mixing two different products, a manual dosing is required, and this also gives a less comfortable use and risk of errors.

A purpose of the invention is then to provide a light and easy-to-use applicator, not requiring any interruption of work to recharge the product.

Further aims of the invention are that the foam is homogenous and well-distributed into the cup, and density of the foam is adjustable by the operator, during the work, to achieve the optimum grade.

The aims are reached with an applicator for treating the teats of milking animals, comprising a handgrip body, a cup and connecting means for the connection to a line supplying a pressurized gas, characterized by:
- at least further connecting means for the connection to a line providing a liquid detergent and/or disinfectant product;
- delivery means adapted to mix said product with said gas, incorporating the gas into the product, forming a foam and filling the said cup with said foam.

According to a preferred embodiment, said delivery means comprise a helical mixer and/or a porous buffer inside said handgrip body.

According to the invention, a porous buffer realized through sponge discs stacked at the base of the cup is provided, so that these sponge discs are crossed by the product flowing into the cup.

To allow adjustment of the foam density, adjusting means are provided according to the invention to press or release said buffer: this allows to modify the porosity of the material, the crossing time and the speed flow of the product. As a consequence, more or less gas is incorporated by the product, producing a more or less dense foam.

The delivery means may be further completed by a net, working as a flow-breaker and diffuser, and by a disc with circumferential holes, both positioned inside the cup.

The gas mixed with the product is normally compressed air.

The applicator is less heavy and easier to handle, because the container is no longer required. Moreover, the operator is no more required to stop the work for re-filling the container. Further advantages are a homogeneous foam, well distributed inside the cup; the manual adjustment of the foam density; the possibility of using a two-component product without a manual mixer.

The invention is now described in detail with reference to a preferred embodiment, with the help of the enclosed figures wherein:
Fig. 1 is a partial cut-out view of an applicator according to the invention;
Fig. 2 is a cross-section of a detail of the applicator of Fig. 1, referring to two different regulations;
Fig. 3 is a schematic example of a plant, adapted to be installed in a farm for the use of a plurality of applicators such as the one of Fig. 1.

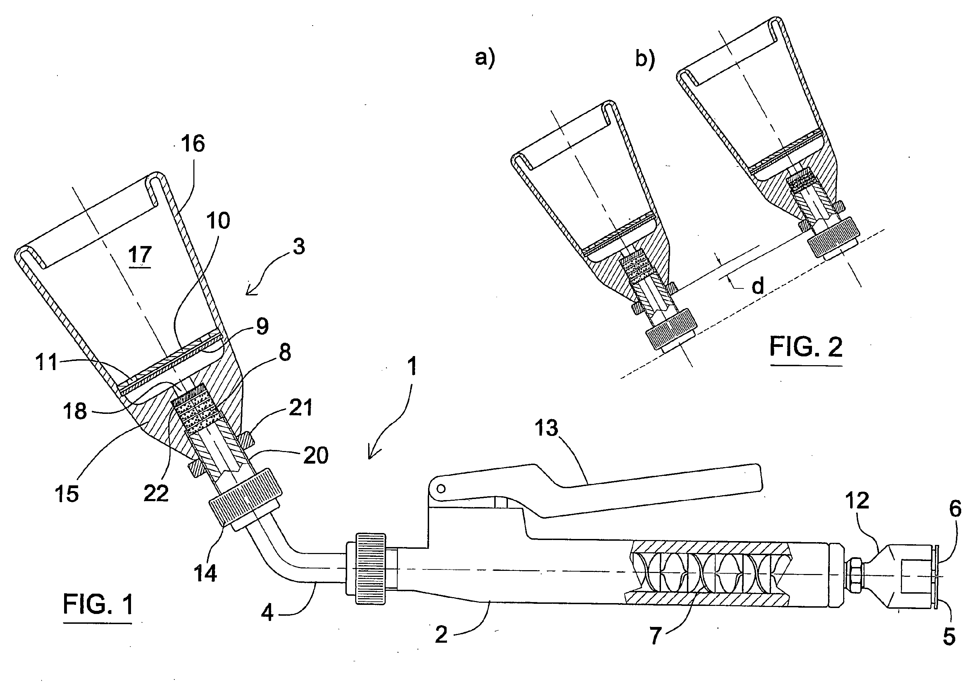

Referring now to Fig. 1, an applicator 1 is shown, essentially comprising a handgrip body 2 and a cup 3 connected by a fitting 4. The cup 3 is shaped to be applied to the teats of an animal, for example a milking cow.

The applicator 1 provides a connection 5 for compressed air and a further connection 6 for a liquid detergent product; the applicator 1 is further provided with delivery means adapted to mix the said liquid detergent with the compressed air, so that the air is incorporated into the product and a foam is formed, filling the cup 3 with said foam.

Referring more in detail to the shown preferred embodiment, said delivery means comprise a helical mixer 7 inside the handgrip body 2 and a porous buffer obtained by a plurality of small discs 8, made of sponge or another open-cell porous material; a net 9 working as a flow-breaker and foam diffuser, a disc 10 with circumferential holes 11 to distribute the foam on the internal surface of the cup 3.

The sponge discs 8 may be replaced by elements having a different shape, or even by a single cylindrical buffer; however a plurality of thin discs, stacked one above the other, are preferred.

Further details of the shown embodiment are given below. Connections 5 and 6 are provided at one end of the handgrip body 2, merging into a single connection 12 towards the helical mixer 7.

The handgrip body 2 comprises a lever 13 for operating an internal shut-off valve of a known type (not shown); a connector 14 is provided between the cup 3 and the fitting tube 4.

The cup 3 has a base 15 fitted to the connector 14, and an upper, preferably conical portion 16, defining a chamber 17 adapted to receive the teat of an animal. The edge of the upper portion 16 is folded towards the inner of the cup 3, to retain the foam when the applicator is turned upside-down.

The base 15 of the cup 3 is provided with a channel 18 for the passage of the foam, said channel having an enlarged portion to receive the sponge discs 8. Said discs 8 are thus located between two annular surfaces, which are part, respectively, of the base 15 and connector 14.

The cup 3 is engaged with the connector 14 by means allowing a relative displacement; in the shown example the base 15 of the cup 3 is screwed on a thread 20 on the external surface of the connector 14, and a stop ring 21 is provided.

The end-of-stroke position for the screwing of cup 3 on connector 14 is adjusted by simply adjusting the position of the ring 21. Different positions of the cup 3 relative to the connector 14 correspond to different degrees of compression of the discs 8: Fig. 2 shows two positions a) and b), differing by a displacement "d" of the cup 3 relative to connector 14.

The net 9 and the disc 10 are positioned into the chamber 17, preferably at the bottom of said chamber and then near the outlet of the channel 18. The net 9 is preferably about 100 µm (100 micron). More preferably, a further disc-shaped net 22 is provided on top of stacked porous discs 8.

An alternative embodiment, not shown, is obtained with a buffer made of a porous, open-cell material located into the handgrip body 2, upstream the mixer 7 or in substitution of the same.

The applicator 1 can be connected to a cleaning and treatment line, adapted to furnish a compressed gas, normally air, and liquid detergent. The liquid detergent can be a single component or the result of two components (base and activator) mixed together.

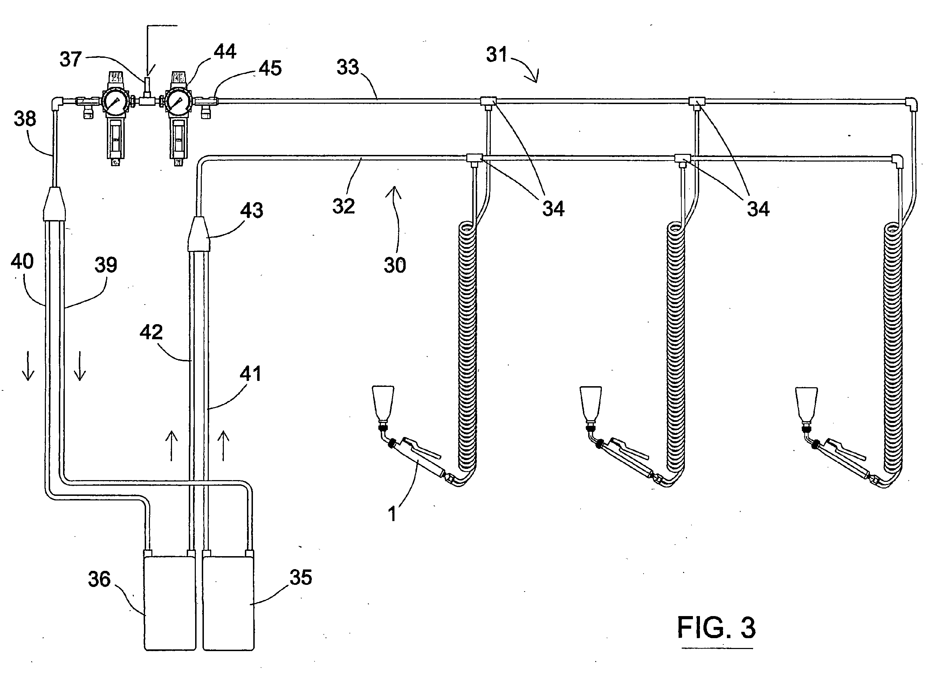

Fig. 3 shows a preferred realization of a cleaning plant, essentially comprising a product line 30, adapted to supply the detergent, and a compressed air line 31 to supply compressed air or, possibly, another gas. Lines 30 and 31 comprise respective branches 32 and 33 where the applicators are connected through joints 34. The applicators are preferably connected with flexible pipes and quick fittings.

Fig. 3 refers to a plant wherein the detergent is obtained by mixing two components, namely a base and an activator, stocked in a liquid form in separate reservoirs. The compressed air is used to pressurize the two reservoirs and pump the liquid base and activator into the product line 30.

More in detail, the plant comprises reservoirs 35 and 36 for the liquid base and activator respectively; the air line 31 has a main duct 37 feeding the branch 33 of the applicators and a further branch 38. The reservoirs 35 and 36 are pressurized by two pipes 39 and 40.

The reservoirs 35 and 36 are connected to delivery pipes 41 and 42 merging into the branch 32 and feeding the applicators through a mixer 43 of a known type. In said mixer 43, the two components are mixed forming the detergent product.

The reservoirs 35 and 36 have essentially an inlet with a cap fitted with a safety valve, a pipe fitting for air inlet, a port with a filter and outlet fitting for the liquid, where a fixed flow-rate regulator and a check valve are mounted.

The compressed air 31 comprises pressure controls 44 and flow-rate regulators 45 on each of branches 33, 38, as well as other components pertaining to know technique (e.g. filters, valves, ...) according to the needs.

The fittings of the pipes for the base and activator may be colour coded to be fool-proof and avoid errors when mounting the plant.

Another solution, not shown, is to provide a mechanical pump for feeding the product line 30.

In case the product is single component, one reservoir only is provided instead of the two reservoirs 35 and 36. The product may be pumped from the reservoir with a pump or still using the compressed air.

The use of the invention is as follows. The operator places the applicator 1 with the cup 3 below the teat of a milking animal, for pre-milking cleaning or after-milking disinfection; then he operates the lever 13, opening the flow of detergent and compressed air.

The detergent and air flows are mixed first through the mixer 7; then the product passing through the discs 8 is further charged with air, forming a more or less dense foam. In particular, a greater compression of the discs 8 (Fig. 2, position "b") yields a dense foam, similar to a shaving foam, while less compressed discs (Fig. 2, position "a") forms a less dense foam. Optimum density is obtained by fine adjustment with the thread 20.

The net 9 works as a flow breaker and foam diffuser, while the disc 10 serves to direct the foam mainly on the internal surface of the cup 3. The cup 3 is then filled with foam and ready to receive the teat of the animal.

## Claims

1. Applicator (1) for treating the teats of milking animals, comprising a handgrip body (2), a cup (3) and connecting means (5) for the connection to a line supplying a pressurized gas, also comprising:
- at least further connecting means (6) for the connection to a line providing a liquid detergent and/or disinfectant product;
- delivery means (7, 8, 9, 10) adapted to mix said product with said gas, incorporating the gas into the product, forming a foam and filling the said cup (3) with said foam, **characterized in that** said delivery means comprise at least a buffer made of a porous, open-cell material, and by adjusting means (15, 20, 21) to adjust the compression of said porous buffer, in order to modify the density of the foam produced.

2. Applicator according to any one of the preceding claims, **characterized by** said porous buffer made of a plurality of discs (8) stacked one on the other.

3. Applicator according to any one of the preceding claims,
**characterized in that**:
- the cup (3) has a base (15) provided with a channel (18) for passage of the foam, connected to the handgrip body (2) by means of a connector (14);
- The porous buffer is placed inside said channel (18) between two annular surfaces respectively defined by said channel (18) and said connector (14);
- the base (15) of the cup (3) is engaged with the connector (14) by coupling means (20) that allows a relative displacement between said cup (3) and said connector (14), thus pressing or releasing the buffer between said two annular surfaces.

4. Applicator according to claim 3, **characterized in that** said coupling means between cup (3) and connector (14) are a thread (20).

5. Applicator according to claim 1, **characterized in that** said delivery means comprise a helical mixer (7) inside said handgrip body (2).

6. Applicator according to any one of the preceding claims, **characterized in that** said delivery means comprise a net (9) inside said cup (3), working as a flow-breaker and diffuser.

7. Applicator according to any one of the preceding claims, **characterized in that** said delivery means comprise a disc (10) placed at the bottom of the cup (3) and having circumferential holes (11)

8. Applicator according to any one of the preceding claims, **characterized in that** said gas is compressed air.

9. A method for adjusting the density of the foam in an applicator (1) for treating the teats of a milking animal according to claim 1, said method comprising the steps of: mixing a pressurized gas and a liquid detergent and/or disinfectant product through a suitable mixer (7); passing the resulting mixed flow of gas and product through the porous buffer provided inside the applicator, regulating the compression of this porous buffer by adjusting means (15, 20, 21), in order to adjust the density of the foam.

10. A method according of claim 9, wherein said porous buffer is made of a plurality of discs (8) stacked inside the applicator (1).

## Patentansprüche

1. Aufbringvorrichtung (1) für die Behandlung der Zitzen von milchproduzierenden Tieren, die ein Greifelement (2), eine Schale (3) und Verbindungsvorrichtungen (5) für den Anschluss an eine Leitung umfasst, die unter Druck gesetztes Gas liefert:
- zumindest eine weitere Verbindungsvorrichtung (6) für den Anschluss an eine Leitung, die ein flüssiges Reinigungsmittel und/oder desinfizierendes Produkt liefert;
- Ausgabevorrichtungen (7, 8, 9, 10), die dazu geeignet sind, das genannte Produkt mit dem genannten Gas zu mischen und dabei das Gas dem Produkt einzuverleiben und dabei einen Schaum zu bilden sowie die genannte Schale (3) mit dem genannten Schaum zu füllen, **dadurch** charakterisiert, dass die genannten Ausgabevorrichtungen zumindest einen Puffer umfassen, der aus porösem Material mit offenen Zellen gemacht ist und durch Anpassungsvorrichtungen (15, 20, 21) zur Anpassung der Kompression des genannten porösen Puffers, um die Dichte des produzierten Schaums zu ändern.

2. Aufbringvorrichtung gemäß jeder beliebigen der vorausgehenden Ansprüche, **dadurch** charakterisiert, dass der genannte poröse Puffer aus einer Vielzahl von Scheiben (8) besteht, die aufeinander gestapelt sind.

3. Aufbringvorrichtung gemäß jeder beliebigen der vorausgehenden Ansprüche, **dadurch** charakterisiert, dass:
- Die Schale (3) über einen Fuß (15) verfügt, der mit einem Kanal (18) für den Durchgang des Schaums ausgerüstet ist, der mittels eines Verbinders (14) mit dem Greifelement (2) verbunden ist;
- Der poröse Puffer befindet sich innerhalb des genannten Kanals (18) zwischen zwei ringförmigen Oberflächen, die jeweils durch den genannten Kanal (18) und den genannten Verbinder festgelegt werden (14);
- Der Fuß (15) dieser Schale (3) ist mit einer Kupplungsvorrichtung (20) mit dem Verbinder (14) verbunden, die eine Verschiebung zwischen der genannten Schale (3) und dem genannten Verbinder (14) gestattet, womit der Puffer zwischen den beiden genannten ringförmigen Oberflächen gepresst und losgelassen wird.

4. Aufbringvorrichtung gemäß Anspruch 3, **dadurch** charakterisiert, dass die genannten Kupplungsvorrichtungen zwischen Schale (3) und Verbinder (14) in einem Gewinde (20) bestehen.

5. Aufbringvorrichtung gemäß Anspruch 1, **dadurch** charakterisiert, dass die genannten Ausgabevorrichtungen einen schneckenförmigen Mischer (7) innerhalb des genannten Greifelements (2) umfassen.

6. Aufbringvorrichtung gemäß jeder beliebigen der vorausgehenden Ansprüche, **dadurch** charakterisiert, dass die genannten Ausgabevorrichtungen ein Netz (9) innerhalb der genannten Schale (3) umfassen, das als Flussbrecher und Diffusor arbeitet.

7. Aufbringvorrichtung gemäß jeder beliebigen der vorausgehenden Ansprüche, **dadurch** charakterisiert, dass die genannten Ausgabevorrichtungen eine Scheibe (10) umfassen, die sich am Boden der Schale (3) befindet und Umfangslöcher (11) aufweist.

8. Aufbringvorrichtung gemäß jeder beliebigen der vorausgehenden Ansprüche, **dadurch** charakterisiert, dass das genannte Gas komprimierte Luft ist.

9. Eine Methode zur Anpassung der Intensität des Schaums in einer Aufbringvorrichtung (1) zur Behandlung der Zitzen eines milchproduzierenden Tiers gemäß Anspruch 1, wobei die genannte Methode die folgenden Schritte umfasst: Mischen eines unter Druck gesetzten Gases und eines flüssigen Reinigungsmittels und/oder eines desinfizierenden Produkts mittels eines passenden Mischers (7); Passieren des sich ergebenden, gemischten Gas- und Produktflusses durch den porösen Puffer in der Aufbringvorrichtung, Einstellung der Kompression dieses porösen Puffers mittels Anpassungsvorrichtungen (15,20,21), um die Dichte des Schaums anzupassen.

10. Eine Methode gemäß Anspruch 9, bei der der genannte poröse Puffer aus einer Vielzahl von Scheiben (8) besteht, die in der Aufbringvorrichtung (1) gestapelt sind.

## Revendications

1. Applicateur (1) pour traiter les pis des bêtes laitières, comprenant une poignée (2), une coupe (3) et des moyens de raccordement (5) sur une ligne d'alimentation en gaz sous pression, comprenant aussi :
- au moins d'autres moyens de raccordement (6) sur une ligne d'alimentation en liquide détergent et/ou en produit désinfectant ;
- des moyens d'alimentation (7, 8, 9, 10) permettant de mélanger dit produit avec dit gaz, afin d'incorporer le gaz dans le produit, de former une mousse et de remplir dite coupe (3) de dite mousse, **caractérisés par le fait que** dits moyens d'alimentation comprennent au moins un tampon en matériau poreux à cellules ouvertes, permettant de régler, à l'aide de moyens de réglage (15, 20, 21), la compression de dit tampon poreux, afin de modifier la densité de la mousse produite.

2. Applicateur conformément à l'une quelconque des revendications précédentes, **caractérisé par le fait que** dit tampon poreux est formé par plusieurs disques (8) empilés les uns sur les autres.

3. Applicateur conformément à l'une quelconque des revendications précédentes, **caractérisé par le fait que** :
- la coupe (3) a une base (15) munie d'un canal (18) de passage de la mousse, raccordé sur la poignée (2) à l'aide d'un connecteur (14) ;
- Le tampon poreux est placé à l'intérieur de dit canal (18) entre deux surfaces en anneau définies respectivement par dit canal (18) et dit connecteur (14) ;
- la base (15) de la coupe (3) est engagée avec le connecteur (14) par des moyens d'accouplement (20) autorisant un déplacement relatif entre dite coupe (3) et dit connecteur (14), causant la compression ou le relâchement du tampon entre les deux surfaces en anneau.

4. Applicateur conformément à la revendication 3, **caractérisé par le fait que** dits moyens d'accouplement entre la coupe (3) et le connecteur (14) sont un fil (20).

5. Applicateur conformément à la revendication 1, **caractérisé par le fait que** dits moyens d'alimentation comprennent un mélangeur hélicoïdal (7) à l'intérieur de dite poignée (2).

6. Applicateur conformément à l'une quelconque des revendications précédentes, **caractérisé par le fait que** dits moyens d'alimentation comprennent un filet (9) à l'intérieur de dite coupe (3), faisant office de brise-débit et de diffuseur.

7. Applicateur conformément à l'une quelconque des revendications précédentes, **caractérisé par le fait que** dits moyens d'alimentation comprennent un disque (10) placé au fond de la coupe (3) percé de trous sur son pourtour (11).

8. Applicateur conformément à l'une quelconque des revendications précédentes, **caractérisé par le fait que** dit gaz est de l'air comprimé.

9. Une méthode de réglage de l'intensité de la mousse dans un applicateur (1) de traitement des pis d'une bête laitière conformément à la revendication 1, dite méthode comprenant les étapes suivantes : mélange d'un gaz sous pression et d'un liquide détergent et/ou d'un produit désinfectant à travers un mélangeur adéquat (7) ; passage du produit additionné de gaz qui en résulte à travers le tampon poreux placé à l'intérieur de l'applicateur, réglage de la compression de ce tampon poreux à l'aide de moyens de réglage (15, 20, 21) afin de régler la densité de la mousse.

10. Une méthode conformément à la revendication 9, où dit tampon poreux est formé de plusieurs disques (8) empilés à l'intérieur de l'applicateur (1).
